# EUROPÄISCHE PATENTANMELDUNG

(11) **EP 2 923 902 A1**
(43) Veröffentlichungstag der Anmeldung: **30.09.2015**
(21) Anmeldenummer: 14162071.6
(22) Anmeldetag: 27.03.2014
(51) Int. Cl.: B60S 3/04

(54) **Verfahren zur Enteisung einer Oberseite eines Lastwagens und Vorrichtung zur Enteisung einer Oberseite eines Lastwagens**

(71) Anmelder: Ferrum AG, 5102 Rupperswil (CH)
(72) Erfinder: Müller, Frank, 5040 Schöftland (CH)
(74) Vertreter: Intellectual Property Services GmbH

(57) **Zusammenfassung**

Vorrichtung zur Enteisung einer Oberseite (21) eines Lastwagens (2) mittels Aufbrechen, Lösen und Entfernen einer Schicht (3) aus gefrorenem Wasser von der Oberseite (21) des Lastwagens (2) umfassend eine erste Enteisungseinheit (4) und eine zweite Enteisungseinheit (5). Die erste Enteisungseinheit (4) und die zweite Enteisungseinheit (5) sind in Serie angeordnet. Die erste Enteisungseinheit (4) und die zweite Enteisungseinheit (5) sind derart ausgestaltet und angeordnet, dass die Schicht aus gefrorenem Wasser auf der Oberseite (21) des Lastwagens (2) mittels der ersten Enteisungseinheit (4) in eine Vielzahl von Teilstücken aufbrechbar ist und die Vielzahl von Teilstücken mittels der zweiten Enteisungseinheit (5) von der Oberseite (21) des Lastwagens (2) entfernbar ist. Die Vielzahl von Teilstücken sind mittels der ersten oder zweiten Enteisungseinheit (4, 5) von der Oberseite (21) des Lastwagens (2) lösbar.

## Beschreibung

Die Erfindung betrifft ein Verfahren zur Enteisung einer Oberseite eines Lastwagens, gemäss dem Oberbegriff des unabhängigen Anspruchs 1 und Vorrichtung zur Enteisung einer Oberseite eines Lastwagens gemäss dem Oberbegriff des unabhängigen Anspruchs 9.

Während der Nacht oder den gesetzlich vorgeschriebenen Pausen eines Lastwagenfahrers kann es sein, dass sich, insbesondere im Winter, auf einer Oberseite des Lastwagens, insbesondere auf der Oberseite eines Aufbau oder eines Anhänger des Lastwagens, eine Schicht aus gefrorenem Wasser bildet. Logistikfirmen, Speditionen und Lastwagenfahrer sind eigentlich gesetzlich dazu verpflichtet den Lastwagen vor Fahrtantritt von dieser Schicht zu befreien. Ein Problem bzw. Nachteil ist, dass das Einhalten dieser gesetzlichen Vorschrift für Lastwagenfahrer sehr mühsam, gefährlich und zeitaufwändig ist und deshalb oft vernachlässigt wird. Aufgrund der Vernachlässigung der Verpflichtung zur Entfernung der Schicht entstehen aber oftmals verheerende Unfälle, da ein Lösen der dicken, zusammenhängenden Schicht eine erhebliche Gefahr für den Verkehr, insbesondere den nachfolgenden Verkehr des Lastwagens, darstellt. Beispielsweise können herunterfallende Schnee- und insbesondere Eisplatten durch eine hohe Fahrgeschwindigkeit eine ungeheure Wucht entwickeln, welche für die nachfolgenden Verkehrsteilnehmer gefährlich oder sogar tödlich sein kann.

Eine aus dem Stand der Technik bekannte Massnahme zur Verhinderung der Bildung der Schicht aus gefrorenem Wasser ist in der EP 2 441 609 A2 beschrieben. Hierbei ist vorgesehen den Lastwagen mit einer beheizbaren Plane auszustatten. Die Plane umfasst elektrische Heizelemente, die eingeschaltet werden, bevor eine Schicht aus gefrorenem Wasser auf der Oberseite des Lastwagens entsteht. In diesem abgestellten Zustand wird die Oberfläche der Oberseite beispielsweise bei etwa +5°C gehalten. Nachteil dieser Lösung ist, dass diese nur für Lastwagen mit einer Plane geeignet ist und somit für einen Lastwagen mit einem massiven Aufbau nicht geeignet. Auch wird eine Restschicht nicht entfernt, sodass es beim Entfernen der Plane zu Verletzungen kommen kann. Ein dritter wesentlicher Nachteil ist der hohe Energieverbrauch und -verschwendung, da die Plane über mehrere Stunden, auch bei sehr niedrigen Temperaturen, geheizt werden muss.

Eine weitere bekannte Massnahme ist in der WO 03/101772 A2 beschrieben. Auch hier ist eine Lösung mit einer Plane für den Lastwagen vorgesehen. Dabei wird der Lastwagen mit einer Plane abgedeckt und diese randseitig fixiert. Unter der Plane ist ein aufblasbarer Blähkörper oder Spreizer angeordnet, der die Plane mittig anhebt und seitlich abgeschrägt spannt, sodass eine an der Plane angewachsene Schicht aus gefrorenem Wasser oder auch Niederschläge seitlich ablaufen. Nachteile der beschriebenen Lösung sind hierbei die hohen Anschaffungskosten der Plane und die sehr umständliche Handhabung.

Daher ist es eine Aufgabe der vorliegenden Erfindung ein Verfahren und eine Vorrichtung vorzuschlagen, die es ermöglichen einen Lastwagen kostengünstig und / oder einfach zu enteisen.

Diese Aufgabe wird durch ein Verfahren zur Enteisung einer Oberseite eines Lastwagens mit den Merkmalen des Anspruchs 1 und eine Vorrichtung zur Enteisung einer Oberseite eines Lastwagens mit den Merkmalen des Anspruchs 9 gelöst.

Erfindungsgemäss wird Verfahren zur Enteisung einer Oberseite eines Lastwagens vorgeschlagen. Das Verfahren umfasst einen ersten Enteisungsschritt, wobei eine Schicht aus gefrorenem Wasser auf der Oberseite des Lastwagens in eine Vielzahl von Teilstücken aufgebrochen wird, und anschliessend in einem zweiten Enteisungsschritt die Vielzahl von Teilstücken von der Oberseite entfernt werden. Im ersten oder zweiten Enteisungsschritt wird die Vielzahl von Teilstücken von der Oberseite gelöst.

Der Lastwagen kann eine tragenden Chassis, meistens ein Leiterrahmen, einem geeigneten Antrieb, eine Fahrerkabine (Fahrerhaus) und einem zum Tragen der Last bzw. Ladung bestimmten Aufbau umfassen. Der Lastwagen kann aber auch ein Sattelzug umfassend ein Gespann aus einer Sattelzugmaschine und einem Auflieger (Sattelaufleger, Sattelanhänger genannt) sein. Der Lastwagen kann beispielsweise ein Kleintransporter, ein Kombinationskraftwagen, ein Kleinbus, ein Kleinlaster, ein Kastenwagen, ein Hochdachkombi oder sogar ein Omnibus sein.

Unter der Oberseite kann die von der Strasse abgewandte Seite des Lastwagens zu verstehen. Die Oberseite des Lastwagens kann die Oberseite des gesamten Lastwagens, der Fahrerkabine und / oder die Oberseite eines Aufbaus oder eines Aufliegers des Lastwagens sein. Der Aufbau oder Auflieger kann vollständig von festen Wänden umschlossen und überdacht sein. Überwiegend kann in eine Fahrrichtung nur die Rückseite in Form von Türen ausgeführt sein. Es ist aber auch möglich, dass die Türen an einer Seite des Lastwagens aufklappbar ausgeführt sind. Der Aufbau oder Auflieger kann kastenförmig sein, beispielsweise ein Kastenwagen oder ein Kofferaufbau oder ein Kühlwagen. Die Oberseite des Aufbaus oder Aufliegers kann eine zusammenhängende von der Strasse abgewandte Fläche sein, oder aber eine konkav gewölbte oder konvex gewölbte oder eine nicht zusammenhängende unförmige Fläche. Die Wände des Aufbau oder Aufliegers können eine Plane, bevorzugt kann eine Seitenwand oder ein Dach des Aufbaus oder Aufliegers aus Kunststoff oder Metall sein.

Der Aufbau oder Auflieger kann ein Kastenwagen sein, der einen rundum geschlossenen und überdachten Laderaum umfassen kann. Der Aufbau oder Auflieger kann mit der Fahrerkabine verbunden bzw. als eine Einheit mit dem Führerhaus ausgeführt sein. Die Fahrerkabine und der Aufbau oder Auflieger können aber auch als zwei getrennte Einheiten ausgeführt sein. Der Aufbau oder Auflieger kann aber auch ein Kofferaufbau sein. Der Kofferaufbau kann kastenförmig ausgeführt, rundum geschlossen und ein überdachter Laderaum sein, der nicht mit dem Führerhaus verbunden, sondern nur auf einer Chassis aufgesetzt sein kann. Im Weiteren kann der Aufbau oder Auflieger ein Kühlwagen, ein Tankaufbau, ein Containerchassis, ein Wechselbrücken-System für ein Wechselladerfahrzeug oder ein Seitenlader sein.

Im ersten Enteisungsschritt wird eine Schicht aus gefrorenem Wasser auf der Oberseite des Lastwagens in eine Vielzahl von Teilstücken aufgebrochen. Die Schicht aus gefrorenem Wasser kann eine, zwei oder mehrere Lagen umfassen. Eine dem Lastwagen zugewandte Lage der Schicht kann mit dem Lastwagen, insbesondere dem Aufbau oder dem Auflieger lösbar oder unlösbar verbunden, beispielsweise angefroren sein. Die Schicht aus gefrorenem Wasser kann Eis oder Schnee oder eine Mischform aus Eis und Schnee sein. Unter eine Vielzahl von Teilstücken aufgebrochen kann verstanden werden, dass die Schicht in eine Vielzahl von Teilstücken, insbesondere Teilstücke mit einer für den Strassenverkehr, insbesondere für den dem Lastwagen direkt nachfolgenden Strassenverkehr, ungefährliche Grösse aufgebrochen wird. Unter einer Vielzahl von Teilstücken können keine Teilstücke mit einer Grösse von beispielsweise grosse plattenförmigen Schichtstücken oder Eisschollen verstanden werden, die also eine derartige Grösse aufweisen, dass die Teilstücke für den Strassenverkehr, insbesondere für einen nachfolgenden Personenwagen bzw. den nachfolgenden Strassenverkehr, gefährlich sein können.

Das Aufbrechen der Schicht kann beispielsweise mit fluidmechanischen, mechanischen, einer Mischung aus fluidmechanischen und mechanischen Mitteln oder aber chemisch Mitteln durchgeführt werden,
- beispielsweise mit Heisswasser, Heissluft oder Wasserdampf aus Düsen, insbesondere Hochdruckdüsen, besprüht oder geschnitten
- beispielsweise Infrarotstrahlen
- beispielsweise Vibration eines oder mehrerer Meissel, Schaber, Walzen oder Flosse, die auch beheizt sein können,
- oder einer Fräse, insbesondere einer Schneefrässchleuder,
- oder Oszillation, also Vibration mittels eines Schallübertrags auf die Schicht,
- beispielsweise mittel chemischem Schmelzen, insbesondere Salz.

Dabei wird die Schicht, insbesondere der Schnee und / oder das Eis in eine Vielzahl von Teilstücken aufgebrochen.

Im zweiten Enteisungsschritt wird die Vielzahl von Teilstücken von der Oberseite des Lastwagens entfernt. Unter entfernen kann verstanden werden, dass die Vielzahl von Teilstücken, in welche die Schicht, insbesondere der Schnee und / oder das Eis aufgebrochen wurde, von der Oberseite des Lastwagens entfernt werden. Das Entfernen der Schicht kann beispielsweise mittels einer oder mehrerer Bürsten, insbesondere Spiral-, Teller oder Radialbürsten, einem Abstreifern, einem oder mehreren Schabern oder Flossen oder einem Gebläse erfolgen.

Im ersten oder zweiten Enteisungsschritt werden die Vielzahl von Teilstücken von der Oberseite gelöst. Die Schicht aus gefrorenem Wasser kann mit der Oberseite des Lastwagens verbunden sein, insbesondere anhaften oder angefroren sein. Unter Lösen der Vielzahl von Teilstücken von der Oberseite kann verstanden werden, dass die Vielzahl von Teilstücken, nach oder während dem Aufbrechen der Schicht, immer noch mit der Oberseite verbunden sind und von dieser gelöst werden. Dies kann mit dem ersten oder zweiten Enteisungsschritt, also mittels der im ersten oder zweiten Enteisungsschritt verwendeten Massnahmen erreicht werden.

Vorteil ist, dass aufgrund des ersten Enteisungsschritts die Schicht aus gefrorenem Wasser auf einfache Art und Weise in eine Vielzahl von Teilstücken aufgebrochen und / oder gelöst wird und die Grösse der Teilstücke somit ungefährlich für den Strassenverkehr sind. Auch besteht beim Aufbrechen der Schicht keine Verletzungsgefahr für eine Person, da die Tätigkeit des Aufbrechens nicht selbstständig durchgeführt wird und die Vielzahl von Teilstücken eine ungefährliche Grösse haben. Gleiches gilt für den zweiten Enteisungsschritts, da die Vielzahl von Teilstücken von der Oberseite entfernt und / oder gelöst wird und die Teilstücke eine ungefährliche Grösse haben, besteht keine Verletzungsgefahr beim Entfernen der Teilstücke. Ausserdem sind keine weiteren Schritte und Tätigkeiten durchzuführen, um die Schicht von der Oberseite zu entfernen und / oder zu lösen. Das erfindungsgemässe Verfahren ist also einfach und ungefährlich durchzuführen. Das Verfahren mit dem ersten und zweiten Enteisungsschritt ist kostengünstig, da hohe Investitionen vermieden und ein Eingreifen und eine Tätigkeit von menschlicher Seite aus, insbesondere des Lastwagenfahrers vermieden wird. Ausserdem ist das Verfahren schnell und effizient durchführbar.

In Ausgestaltung der Erfindung umfasst die Schicht aus gefrorenem Wasser eine oder mehrere Lagen, insbesondere eine Lage Eis und / oder eine Lage Schnee. Wie bereits erwähnt, kann die Schicht eine einfache Lage Eis oder eine Lage Eis und auf dieser Schnee umfassen. Die Schicht kann aber auch einen komplexen Aufbau umfassen, beispielsweise abwechselnd mehrere Lagen Eis und Schnee. Vorteilhafterweise kann mittels des Verfahrens jede Schicht mit jeder Art von Lagen in eine Vielzahl von Teilstücken aufgebrochen und / oder die Teilstücke entfernt und / oder gelöst werden.

In Ausgestaltung der Erfindung wird vor dem ersten Enteisungsschritt ein Reinigungsschritt durchgeführt wird. Der Reinigungsschritt entfernt eine oder mehrere Lage der Schicht aus gefrorenem Wasser auf der Oberseite des Lastwagens, insbesondere eine oder mehrere Lagen Schnee. Der Reinigungsschritt kann mechanisch oder fluidmechanisch erfolgen, beispielsweise mit Heisswasser, Heissluft oder Wasserdampf aus Düsen, insbesondere Hochdruckdüsen, oder aber mit einem Schaber, einer oder Flosse oder einer Bürste. Mittels des Reinigungsschritts kann eine oder mehrere Lagen, die sich auf der von der Oberseite des Lastwagens abgewandten Seite befinden, entfernt werden. Ausserdem können nacheinander der Reinigungsschritt und / oder anschliessend der erste Enteisungsschritt und / oder anschliessend der zweite Enteisungsschritt auf der Oberseite des Lastwagens, insbesondere auf der Oberseite des Aufbaus oder Aufliegers des Lastwagens, durchgeführt werden. Vorteilhafterweise kann somit der erste Enteisungsschritt direkt auf einer unteren Lagen, also einer sich näher oder direkt an der Oberseite befindenden Lage der Schicht, insbesondere an einer Lage Eis, durchgeführt werden, sodass diese einfach und effektiv in eine Vielzahl von Teilstücken aufgebrochen werden kann.

Ergänzend kann ein Abführschritt vorgesehen sein. Der Abführschritt kann während oder nach dem ersten Reinigungsschritt und / oder Enteisungsschritt und / oder zweiten Reinigungsschritt durchgeführt werden. Der Abführschritt kann beispielsweise mittels einer Schneerutsche, einer Verteilerrutsche und / oder einem Auffangcontainer oder einem Förderband durchgeführt werden. Wesentlich ist beim Abführschritt, dass die Vielzahl von Teilstücken, die vom Lastwagen entfernt wurden, vom Lastwagen ab- bzw. wegtransportiert werden. Somit kann vorteilhafterweise die Enteisung kontinuierlich durchgeführt werden, ohne diese unterbrochen werden muss, um die vom Lastwagen entfernten Schicht abzuführen.

In Ausgestaltung der Erfindung sind eine Reinigungseinheit und / oder die erste Enteisungseinheit und / oder die zweite Enteisungseinheit in eine Enteisungsanlage integriert, wobei die Enteisungsanlage während des Reinigungsschritts und / oder des ersten Enteisungsschritts und / oder des zweiten Enteisungsschritts in eine Längsrichtung entlang der Oberseite des Lastwagens hin und her bewegt wird. Die Enteisungsanlage kann beispielsweise ein Portal oder Tor oder ein Gerüst sein, in das eine Reinigungseinheit und / oder eine erste Enteisungseinheit und / oder eine zweite Enteisungseinheit integriert sind und mit welchen der Reinigungsschritts und / oder der erste Enteisungsschritt und / oder der zweiten Enteisungsschritt durchgeführt werden. Die Enteisungsanlage kann eine Einfahrts- und eine Durchfahrtsrichtung des Lastwagens vorgeben. Somit kann auch die Längsrichtung vorbestimmt sein, d.h. diese kann der Einfahrts- und / oder Durchfahrtsrichtung des Lastwagens entsprechen. Die Enteisungsanlage kann sich entlang der Längsrichtung hin und her bewegen oder aber auch nur in eine Richtung bewegen, sodass auf der Oberseite des Lastwagens der Reinigungsschritt und / oder der erste Enteisungsschritt und / oder zweite Enteisungsschritt nacheinander durchgeführt werden können. Der Lastwagen kann aber auch in eine Halle eingefahren werden, wobei die Enteisungsanlage in der Halle installiert sein kann und sich über die Oberseite des Lastwagens hin und her bewegt. Vorteilhafterweise kann die Enteisungsanlage so über den Lastwagen hinwegbewegt werden, dass die Schicht aus gefrorenem Wasser einfach in eine Vielzahl von Teilstücke aufgebrochen wird und / oder die Teilstücke entfernt und / oder gelöst werden können. Ausserdem stellt die Integration des Reinigungsschritts und / oder des ersten Enteisungsschritts und / oder des zweiten Enteisungsschritts in die Enteisungsanlage eine kostengünstige Lösung dar.

In Ausgestaltung der Erfindung wird der Lastwagen, bevorzugt die Oberseite des Aufbaus des Lastwagens, während des Reinigungsschritts und / oder des ersten Enteisungsschritts und / oder des zweiten Enteisungsschritts in der Enteisungsanlage hin und / oder her bewegt. Der Lastwagen kann sich somit entlang der oder durch die Enteisungsanlage in Längsrichtung hin und / oder her bewegen bzw. auch nur in eine Richtung bewegen, sodass auf der Oberseite des Lastwagens der Reinigungsschritt und / oder der erste Enteisungsschritt und / oder zweite Enteisungsschritt durchgeführt werden. Somit kann der Lastwagen die Enteisungsanlage vorteilhafterweise einfach und kostengünstig durchfahren.

Erfindungsgemäss wird im weiteren eine Vorrichtung zur Enteisung einer Oberseite eines Lastwagens, insbesondere der Oberseite eines Aufbaus des Lastwagens, mittels Aufbrechen, Lösen und Entfernen einer Schicht aus gefrorenem Wasser von der Oberseite des Lastwagens vorgeschlagen. Die Vorrichtung umfasst
- eine erste Enteisungseinheit und
- eine zweite Enteisungseinheit,
wobei die erste Enteisungseinheit und die zweite Enteisungseinheit in Serie angeordnet sind. Die erste Enteisungseinheit und die zweite Enteisungseinheit sind derart ausgestaltet und angeordnet, dass die Schicht aus gefrorenem Wasser auf der Oberseite des Lastwagens mittels der ersten Enteisungseinheit in eine Vielzahl von Teilstücken aufbrechbar ist und die Vielzahl von Teilstücken mittels der zweiten Enteisungseinheit von der Oberseite des Lastwagens entfernbar ist. Die Vielzahl von Teilstücken sind mittels der ersten oder zweiten Enteisungseinheit von der Oberseite des Lastwagens lösbar.

Die erste Enteisungseinheit und die zweite Enteisungseinheit sind derart ausgestaltet und angeordnet, dass die Schicht aus gefrorenem Wasser auf der Oberseite des Lastwagens mittels der ersten Enteisungseinheit in eine Vielzahl von Teilstücken aufbrechbar ist und die Vielzahl von Teilstücken mittels der zweiten Enteisungseinheit von der Oberseite des Lastwagens entfernbar ist. Die Vielzahl von Teilstücken sind mittels der ersten oder zweiten Enteisungseinheit von der Oberseite des Lastwagens lösbar. Die Schicht aus gefrorenem Wasser kann eine, zwei oder mehrere Lagen umfassen. Eine dem Lastwagen zugewandte Lage der Schicht kann mit dem Lastwagen, insbesondere dem Aufbau oder dem Auflieger lösbar oder unlösbar verbunden sein. Die Schicht aus gefrorenem Wasser kann Eis oder Schnee oder eine Mischform aus Eis und Schnee sein. Unter mittesl der ersten Enteisungseinheit in eine Vielzahl von Teilstücken aufbrechbar kann verstanden werden, dass die Schicht in eine Vielzahl von Teilstücken aufbrechbar ist, die für den dem Lastwagen nachfolgenden Strassenverkehr, eine ungefährlichen Grösse aufweisen. Unter einer Vielzahl von Teilstücken können keine Teilstücke mit einer Grösse von beispielsweise plattenförmigen Schichtstücken oder Eisschollen verstanden werden, die also eine derartige Grösse aufweisen, dass die Teilstücke für den Strassenverkehr, insbesondere für einen nachfolgenden Personenwagen, gefährlich sein können.

Der Lastwagen kann die bereits beim erfindungsgemässen Verfahren ausführlich beschrieben Ausgestaltungen umfassen. Unter der Oberseite ist die von der Strasse abgewandte Seite des Lastwagens zu verstehen. Die Oberseite des Lastwagens kann die Oberseite des gesamten Lastwagens oder aber die Oberseite eines Aufbaus oder eines Aufliegers des Lastwagens sein.

Die Vorrichtung umfasst eine erste Enteisungseinheit und eine zweite Enteisungseinheit, wobei die erste Enteisungseinheit und die zweite Enteisungseinheit in Serie angeordnet sind. Die erste Enteisungseinheit kann derart ausgestaltet und angeordnet sein, dass diese nicht notwendigerweise räumlich sondern funktional vor der zweiten Enteisungseinheit angeordnet sein kann. Die erste Enteisungseinheit kann also beispielsweise aufgrund einer Fahrtrichtung des Lastwagens oder einer Durchfahrtsrichtung des Lastwagens durch eine Enteisungsanlage oder eine Bewegungsrichtung der Enteisungsanlage vor der zweiten Enteisungsanlage angeordnet sein, also in Serie zur zweiten Enteisungseinheit angeordnet sein.

Die erste und / oder zweite Enteisungseinheit können jeweils in einem einzelnen Gehäuse als ein Modul oder in einem gemeinsamen Gehäuse angeordnet sein. Vorteilhafterweise sind diese so vor äusseren Einflüssen geschützt. Ausserdem können an der ersten und / oder zweiten Enteisungseinheit beispielsweise Rollen oder Gleitkufen angeordnet sein, sodass das Gehäuse einfach und mit gleichem Abstand auf der Oberseite des Lastwagens bewegt werden kann. Vorteile der ersten und zweiten Enteisungseinheit sind, dass diese einfach anzuwenden und kostengünstig im Betrieb sind. Ausserdem kann beispielsweise durch die konsequente Verwendung von Normteilen die Fertigungskosten minimiert werden.

Vorteile der erfindungsgemässen Vorrichtung sind, dass mittels der ersten Enteisungseinheit die Schicht aus gefrorenem Wasser auf einfache Art und Weise in eine Vielzahl von Teilstücken aufbrechbar und / oder lösbar und mittels der zweiten Enteisungseinheit einfach entfernbar und / oder lösbar ist. Die daraus resultierenden Vielzahl von Teilstücken und deren Grösse sind ungefährlich für den Strassenverkehr. Auch besteht beim Aufbrechen und / oder Lösen der Schicht keine Verletzungsgefahr für eine Person, da die Tätigkeit des Aufbrechens nicht selbstständig durchgeführt wird und die Teilstücke eine ungefährliche Grösse haben. Gleiches gilt für das Entfernen und / oder Lösen der Teilstücke, da die Vielzahl von Teilstücken, die von der Oberseite entfernt und / oder gelöst werden, relativ zur Schicht klein und ungefährlich sind, besteht keine Verletzungsgefahr und keine Gefährdung für den Strassenverkehr.

In Ausgestaltung der Erfindung kann die erste Enteisungseinheit eine Schneideeinheit, eine Löseeinheit oder eine Mechanikeinheit sein. Die zweite Enteisungseinheit kann eine Abstreifeinheit, eine Gebläseeinheit, eine Spüleinheit, eine Förderschnecke oder eine erste Bürsteneinheit sein.

Mittels der Mechanikeinheit ist die Schicht in eine Vielzahl von ungefährlichen Teilstücken aufbrechbar. Das Aufbrechen der Schicht kann fluidmechanisch, mechanisch, einer Mischung aus fluidmechanischen und mechanischen Mitteln oder aber mit chemischen Mitteln erfolgen. Die Mechanikeinheit kann ein Schneeschieber sein, der beispielsweise eine oder mehrere Flossen umfasst, welche über einen Kettentrieb wie auf einem Förderband zirkulieren und so über die Oberseite des Lastwagens gezogen werden können. Gleichzeitig kann die erste Enteisungseinheit in Längsrichtung des Lastwagens verschoben werden, wodurch die Schicht aus gefrorenem Wasser in eine Vielzahl von Teilstücken aufgebrochen wird und gelöst werden kann. Die Flossen können beispielsweise aus einem Kunststoff, insbesondere einem Elastomer hergestellt, sodass diese elastisch sein können, und in Standartprofile eingeschoben sein. Die Standartprofile können über eine Halterung mit der Kette verbunden sein, sodass die Flosse vorteilhafterweise unkompliziert beispielsweise für Revisionsarbeiten demontierbar ist oder bei Bedarf sogar eine zusätzliche Flossen hinzufügbar oder entfernbar ist. Die Flosse kann abgeschrägt sein, sodass beim Eingriff eine bessere Kraftverteilung in die Schicht erfolgt. Durch die elastischen Flossen kann auch eine unebene Oberseite des Lastwagens zuverlässig von der Schicht befreit werden und eine Beschädigung des Lastwagens vermieden werden.

Die Mechanikeinheit kann eine Schneefräse, insbesondere eine Zusammenstellung aus Schneefräsen sein. Die Schneefräse kann eine oder mehrere, insbesondere zwei bis vier Schneefräsen umfassen, die die Schicht aufbrechen und / oder von der Oberseite des Lastwagens lösen können. Die Schneefräse kann eine Fräshaspel, beispielsweise zwei gegenläufige Spiralen, umfassen, die sich im Urzeigersinn drehen und die Schicht so aufbrechen und / oder lösen. Die Vielzahl von Teilstücken kann beispielsweise durch einen Auswurfkamin ausgeworfen werden. Mit dem Auswurfkamin kann die Richtung und die Flugbahn der Eis- und Schneemasse gesteuert werden, so dass sie am gewünschten Ort zu liegen kommt. Zusätzlich können Düsen angebracht sein, welche eine Restschicht mittels eines Fluids, beispielsweise Wasser, aufbrechen, lösen und / oder entfernen. Ebenso kann ein Gebläse, beispielsweise Standartgebläse einer Waschanlagen in der ersten Enteisungseinheit angeordnet sein, um eine wiederanhaften an der Oberseite des Lastwagens zu verhindern.

Die Mechanikeinheit kann ein Meissel, insbesondere ein Meisselsystem sein. Das Meisselsystem kann einen oder mehrere Meissel, bevorzugt 4 - 40, besonders bevorzugt 15 - 30 Meissel umfassen. Die Meissel können über eine Lastwagenbreit verteilt sein. Die Meissel oder eine Meisseleinheit, welche einen oder mehrere Meissel umfasst, kann individuell in der Höhe eingestellt werden und sich so sehr gut an die Oberfläche der Oberseite des Lastwagens anpassen, insbesondere auch an eine gewölbte Oberfläche. Die Meissel sind über eine Antriebswelle antreibbar. Über einen Zahnriemen kann beispielsweise jeweils pro Meisseleinheit eine Exzenterwelle mit zwei Meisseln in Schwingung versetzt werden, wodurch beim Aufsetzen der Meissel auf der Schicht diese aufbricht und / oder sich löst.

Die Mechanikeinheit kann auch ein Vibrationsmodul sein, welches beispielsweise eine Rondelle, ein Vibrationsmotor und ein Dämpfungselement umfasst und Schwingungen auf das Eis übertragen kann. Die Rondelle können an einer Berührungsfläche mit einer Gummischicht überzogen sein und somit den Lastwagen gegen Beschädigungen schützen. Das kann derart angeordnet sein, dass die Schwingungen nicht auf andere Bauteile übertragen werden können.

Die Mechanikeinheit kann ein Schwingungserreger sein. Dabei kann der Oszillator oder Schwingungserreger einen Schwingungsübertrager, beispielsweise einen Stab, in Schwingung versetzen. Mittels des Schwingungsübertragers kann eine Kraft direkt auf die Schicht übertragen werden und somit die Schicht in eine Vielzahl von kleinen und ungefährlichen Teilstücken aufgebrochen werden. Eine Resonanzfrequenz, in welchem die Schicht aufbricht, kann in einem Bereich von 10 - 30 Hz, bevorzugt in einem Bereich von 15 - 25, besonders bevorzugt in einem Bereich von 18 - 22 Hz liegen. Ausserdem kann die Schicht einfach von der Oberseite des Lastwagens gelöst werden.

Die Mechanikeinheit kann auch ein Schild und / oder eine Heizschaufel sein. Das Schild kann eine oder mehrere Lagen der Schicht von der Oberseite seitlich wegtransportieren. An eine Stirnseite der Heizschaufel kann eine Heizschlange montiert sein, welche die Schicht beispielsweise mit ca. 60 bis 90°C aufbricht und / oder löst. Die Mechanikeinheit kann ein Schlagwalzensystem sein, wobei eine bzw. die Schlagwalze(n) mit einem Eigen- oder wenn nötig mit einem Zusatzgewicht auf der Schicht aufschlagen und dadurch die Schicht aufbrechen und / oder lösen.

Mittels der Schneideeinheit ist die Schicht in eine Vielzahl von ungefährlichen Teilstücken aufbrechbar, insbesondere zerschneidbar. Das Aufbrechen der Schicht mittels der Schneideeinheit kann fluidmechanisch, mechanisch, chemisch oder einer Mischung aus beidem erfolgen. Die Schneideeinheit kann eine oder mehre Düsen umfassen, durch die ein Fluid, beispielsweise Wasser oder Wasserdampf, mit einem Druck, insbesondere Hochdruck, die Schicht auf der Oberseite des Lastwagen aufbricht. Die Schneideeinheit kann beispielsweise ein Hochdruckwasserschneider sein. Dem Fluid kann ein Frostschutzmittel zugegeben sein. Die Schneideeinheit kann die Schicht mit dem Fluid unter einem Druck von 100 bis 200 bar, insbesondere 130 bis 170 bar, bestrahlen. Der Druck eines Fluidstrahls kann beispielsweise mittels einer Druckregelung angepasst werden. Die Schicht aus gefrorenem Wasser kann somit mittels des Drucks der Fluidstrahlen aufgebrochen und / oder gelöst werden. Die Schneideeinheit kann auch ein Dampfstrahlschneider sein, wobei mit einem Dampfstrahl des Fluids die Schicht aufgebrochen und / oder gelöst werden kann. Vorteil der Schneideeinheit ist, dass sich der Fluidstrahl perfekt an eine Oberfläche der Oberseite des Lastwagens anpasst und somit das Enteisen optimiert. Das Risiko einer Beschädigung des Lastwagens kann durch die Druckregelung minimiert werden.

Die erste Enteisungseinheit kann ein Infrarotstrahler sein, der die Schicht aus gefrorenem Wasser aufheizt und diese in eine Vielzahl von Teilstücken aufbricht und / oder löst. Somit kann die Schicht berührungslos und unabhängig von der Form der Oberseite des Lastwagens komplett entfernt werden. Ebenso kann die erste Enteisungseinheit eine Löseeinheit sein. Dabei wird die Schicht mittels einem chemischen Reagenz, beispielsweise Salz, aufgebrochen und / oder gelöst.

Die Abstreifeinheit kann beispielsweise ein Schild oder ein Schieber sein. Das Schild kann eine Verkippung oder eine Schräge gegenüber einer Längsachse der Längsrichtung aufweisen. Das Schild kann somit vorteilhafterweise eine, mehrere oder alle Lagen der Vielzahl von Teilchen der Schicht von der Oberseite des Lastwagens lösen und / oder entfernen. Mit Vorteil kann die Abstreifeinheit eine flexible Gummilippe umfassen, um Beschädigungen am Lastwagen zu vermeiden.

Die Gebläseeinheit kann ein Gebläse, beispielsweise einen Fön, umfassen und so die Vielzahl von Teilchen der Schicht von der Oberseite des Lastwagens lösen und / oder entfernen. Ausserdem kann das Ausbilden neuer gefrorener Schichten verhindert werden.

Die erste Bürsteneinheit kann einen oder mehrere Tellerbesen, Spiralbesen oder Rotationsbürsten umfassen, die derart angeordnet sind, dass eine oder mehrere Lagen der Schicht von der Oberseite gelöst und von der Oberseite des Lastwagens entfernt werden. Die erste Bürsteneinheit kann höhenverstellbar sein und gewährleistet so vorteilhafterweise eine Anpassung und einen optimalen Eingriff jeder Borste in die kleinste Unebenheit, beispielsweise eine Vertiefung in der Oberseite des Lastwagens, wodurch die Vielzahl von Teilstücken optimal gelöst und / oder entfernt werden können.

Die Spüleinheit kann eine oder mehre Düsen umfassen, die die Vielzahl von Teilchen ein Fluid mit Druck von der Oberseite entfernen und / oder lösen. Dem Fluid kann ein Frostschutzmittel zugegeben sein. Ach hier kann der Druck des Fluids mittels einer Druckregelung angepasst werden. Die Spüleinheit kann auch ein Dampfstrahler sein, wobei mit einem Dampfstrahl des Fluids die Schicht entfernt und / oder gelöst werden kann. Vorteil der Spüleinheit ist, dass sich der Fluidstrahl perfekt an eine Oberfläche der Oberseite des Lastwagens anpasst und somit das Enteisen optimiert. Das Risiko einer Beschädigung des Lastwagens kann durch die Druckregelung minimiert werden.

In Ausgestaltung der Erfindung umfasst die Vorrichtung eine Reinigungseinheit und die Reinigungseinheit und die erste Enteisungseinheit sind in Serie angeordnet. Die Reinigungseinheit kann also derart ausgestaltet und angeordnet sein, dass diese nicht notwendigerweise räumlich sondern funktional vor der ersten Enteisungseinheit angeordnet sein kann. Die erste Enteisungseinheit kann also beispielsweise aufgrund einer Fahrtrichtung des Lastwagens oder einer Durchfahrtsrichtung des Lastwagens durch eine Enteisungsanlage oder eine Bewegungsrichtung der Enteisungsanlage vor der ersten Enteisungsanlage angeordnet und verwendbar sein. Die Reinigungseinheit ist eine Förderschnecke, eine Abstreifeinheit, eine Besprühungseinheit, eine Drucklufteinheit oder eine zweite Bürsteneinheit. Die Abstreifeinheit und zweite Bürsteneinheit entsprechen im Wesentlichen der bereits beschriebenen Abstreifeinheit und ersten Bürsteneinheit der zweiten Enteisungseinheit. Die Besprühungseinheit, eine Drucklufteinheit entsprechen im Wesentlichen der bereits beschriebenen Spüleinheit der zweiten Enteisungseinheit. Vorteilhafterweise können mittels der Reinigungseinheit eine oder mehrere Lagen der Schicht, insbesondere Schnee, von der der Oberseite des Lastwagens abgewandten Seite der Schicht entfernen.

In Ausgestaltung der Erfindung sind die Reinigungseinheit und / oder die erste Enteisungseinheit und / oder die zweite Enteisungseinheit in eine Enteisungsanlage integriert. In einem Betriebszustand ist die Enteisungsanlage entlang der Oberseite des Lastwagens, insbesondere der Oberseite eines Aufbaus des Lastwagens, hin und / oder her bewegbar. In einem anderen Betriebszustand ist der Lastwagen mit der Oberseite, bevorzugt der Lastwagen mit der Oberseite des Aufbaus, an der Enteisungsanlage hin und / oder her bewegbar ist.

Die Enteisungsanlage kann beispielsweise ein Portal, ein Tor, ein Gerüst oder eine Halle sein, in das eine Reinigungseinheit und / oder eine erste Enteisungseinheit und / oder eine zweite Enteisungseinheit integriert sind. Die Enteisungsanlage kann eine Einfahrts- und eine Durchfahrtsrichtung des Lastwagens vorgeben. Somit ist auch die Längsrichtung vorbestimmt, d.h. diese kann der Einfahrts- und / oder Durchfahrtsrichtung des Lastwagens entsprechen. Die Enteisungsanlage kann fest installiert und begehbar sein, wodurch eine Wartung oder eine Revision der Enteisungsanlage einfach ermöglich ist. Vorteilhafterweise ermöglicht es die Enteisungsanlage die Reinigungseinheit und / oder die erste Enteisungseinheit und / oder die zweite Enteisungseinheit sehr einfach mechanisch und elektronisch miteinander zu verbinden. Zudem können die Reinigungseinheit und / oder die erste Enteisungseinheit und / oder die zweite Enteisungseinheit oder auch zusätzliche Einheiten ohne grossen Aufwand montiert werden. Die Enteisungsanlage kann entlang der Längsrichtung hin und / oder her bewegen oder aber auch nur in eine Richtung bewegbar sein. Ebenso kann der Lastwagen entlang der oder durch die Enteisungsanlage in Längsrichtung hin und / oder her bewegbar sein bzw. auch nur in eine Richtung bewegbar sein. Die Enteisungsanlage kann ebenso in die Halle integriert oder in der Halle fest als Portal bzw. Gerüst in der Halle installiert oder aufgestellt sein. Der Lastwagen kann dann in die Halle eingefahren werden, wobei dabei entweder die Enteisungsanlage über die Oberseite des Lastwagens hin und / oder her bewegbar ist oder der Lastwagen durch die Halle bewegbar ist.

Vorteilhafterweise ist die Enteisungsanlage somit über den Lastwagen bzw. der Lastwagen in der Enteisungsanlage hin und / oder her bewegbar, wodurch die Schicht aus gefrorenem Wasser einfach entfernt werden kann. Ausserdem ist die Integration der Reinigungseinheit und / oder die erste Enteisungseinheit und / oder die zweite Enteisungseinheit in die Enteisungsanlage eine kostengünstige Lösung.

In Ausgestaltung der Erfindung sind die von der Oberseite des Lastwagens entfernte Vielzahl von Teilstücken mittels einer Abführeinheit, insbesondere mittels einer Verteilerrutsche, eines Förderbands oder einem Auffangbereich, vom Lastwagen abtransportierbar.

Das Verfahren zur Enteisung der Oberseite eines Lastwagens ist mit der Vorrichtung zur Enteisung der Oberseite eines Lastwagens durchführbar.

Weitere vorteilhafte Massnahmen und bevorzugte Verfahrensführungen ergeben sich aus den abhängigen Ansprüchen.

Im Folgenden wird die Erfindung sowohl in apparativer als auch in verfahrenstechnischer Hinsicht anhand von Ausführungsbeispielen unter Bezugnahme auf die Zeichnung näher erläutert. In der schematischen Zeichnung zeigen:
- Fig. 1 a - c: schematische Darstellungen eines ersten, zweiten und dritten Ausführungsbeispiel einer Enteisungsanlage;
- Fig. 2 a - c: schematische Darstellungen eines ersten, zweiten und dritten Ausführungsbeispiel einer Bewegungsrichtung eines Lastwagens in der Enteisungsanlage;
- Fig. 3 a - e: schematische Darstellungen eines ersten, zweiten, dritten, vierten und fünften Ausführungsbeispiels eines Reinigungseinheit;
- Fig. 4 a - f: schematische Darstellungen eines ersten, zweiten, dritten, vierten, fünften und sechsten Ausführungsbeispiels einer ersten Enteisungseinheit;
- Fig. 5 a - e: schematische Darstellungen eines ersten, zweiten, dritten, vierten und fünften Ausführungsbeispiels einer zweiten Enteisungseinheit;
- Fig. 6 a - c: schematische Darstellungen eines ersten, zweiten und dritten, Ausführungsbeispiels einer Abführeinheit;
- Fig. 7a: eine schematische Darstellung eines sechsten Ausführungsbeispiels einer Reinigungseinheit;
- Fig. 7b: eine schematische Darstellung eines siebten Ausführungsbeispiels einer ersten Enteisungseinheit;
- Fig. 7c: eine schematische Darstellung eines sechsten Ausführungsbeispiels einer zweiten Enteisungseinheit;
- Fig. 8: eine schematische Darstellung eines vierten Ausführungsbeispiels einer Enteisungsanlage;
- Fig. 9: eine schematische Darstellung eines fünften Ausführungsbeispiels einer Enteisungsanlage.

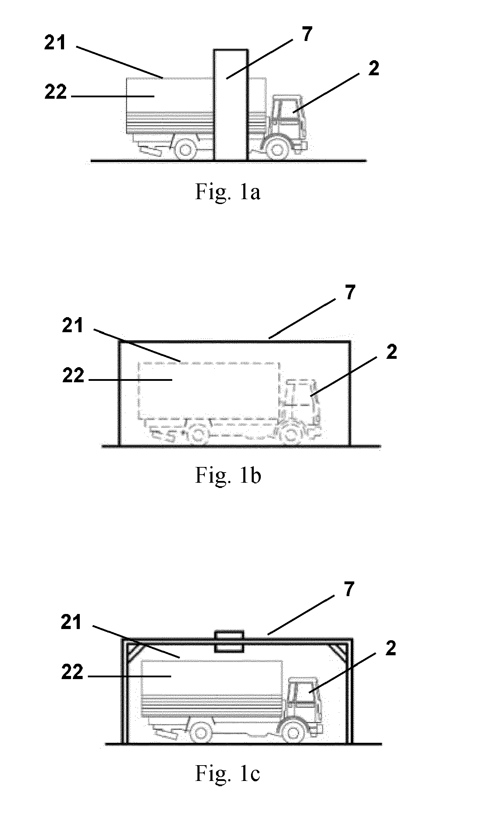

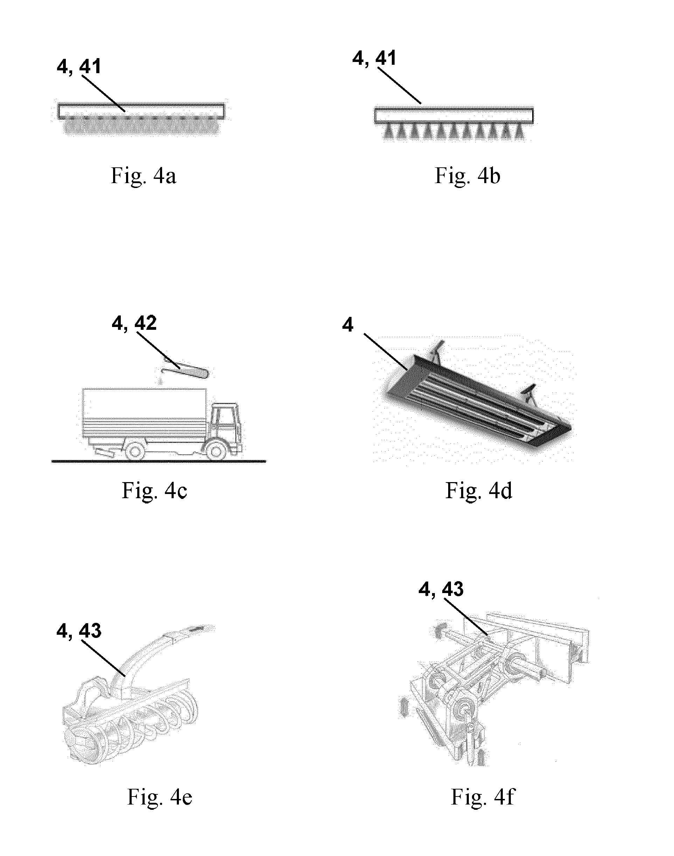

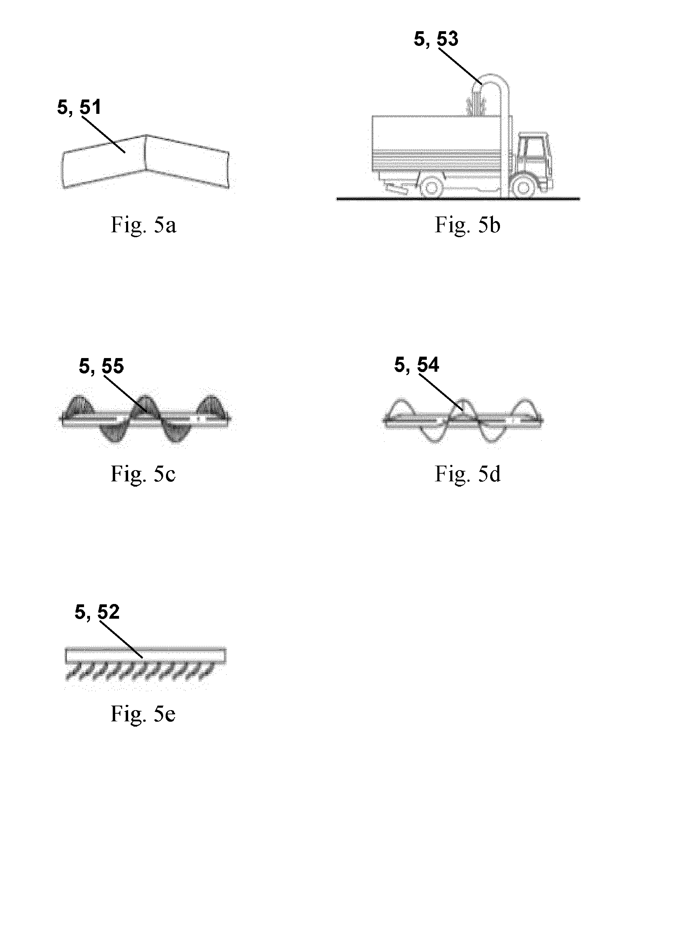

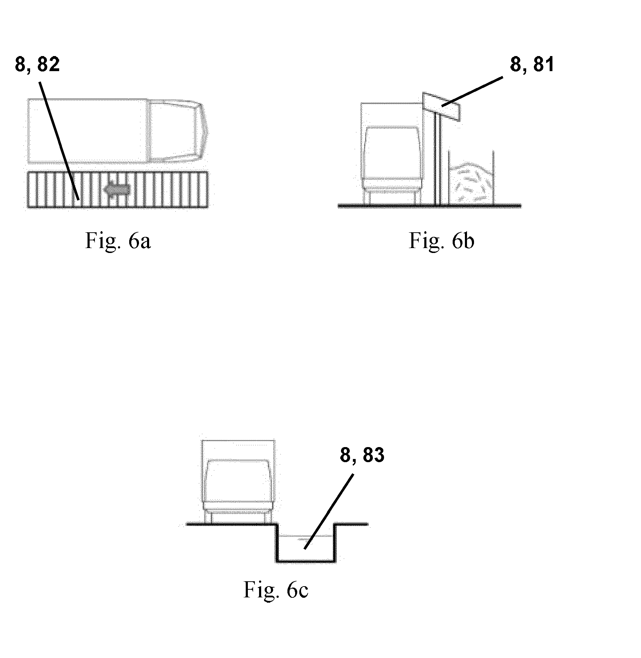

Fig. 1 a - c zeigen schematische Darstellungen eines ersten, zweiten und dritten Ausführungsbeispiels einer Enteisungsanlage 7. Die Fig. 1 a - c zeigen alle einen Lastwagen 2 mit einem Aufbau 22 und einer Oberseite 21 des Lastwagens 2, insbesondere einer Oberseite 21 eines Aufbaus 22 eines Lastwagens 2. Im ersten Ausführungsbeispiel der Enteisungsanlage 7 in der Fig. 1 a ist die Enteisungsanlage 7 als ein Portal ausgeführt. Eine erste und zweite Enteisungseinheit (nicht dargestellt, siehe Fig. 4 a-f und Fig. 5 a-e, Bezugszeichen 4, 5) sind in das Portal integriert. Im Betriebszustand fährt der Lastwagen 2 in die Enteisungsanlage 7, bevorzugt unter das Portal ein. Im zweiten Ausführungsbeispiel der Enteisungsanlage 7 in der Fig. 1 b ist die Enteisungsanlage 7 als eine Halle ausgeführt. Eine erste und zweite Enteisungseinheit (nicht dargestellt, siehe Fig. 4 a-f und Fig. 5 a-e, Bezugszeichen 4, 5) sind in die Halle integriert. Im Betriebszustand fährt der Lastwagen 2 in die Enteisungsanlage 7, bevorzugt in die Halle, ein. Im dritten Ausführungsbeispiel der Enteisungsanlage 7 in der Fig. 1 c ist die Enteisungsanlage 7 als ein Gerüst ausgeführt. Eine erste und zweite Enteisungseinheit (nicht dargestellt, siehe Fig. 4 a-f und Fig. 5 a-e, Bezugszeichen 4, 5) sind in das Gerüst integriert. Im Betriebszustand fährt der Lastwagen 2 in die Enteisungsanlage 7, bevorzugt unter das Gerüst, ein. In den Fig. 1 a - c kann eine Reinigungseinheit (nicht dargestellt, siehe Fig. 6 a-e, Bezugszeichen 6) kann, muss aber nicht notwendigerweise, in die Enteisungsanlage 7 integriert sein.

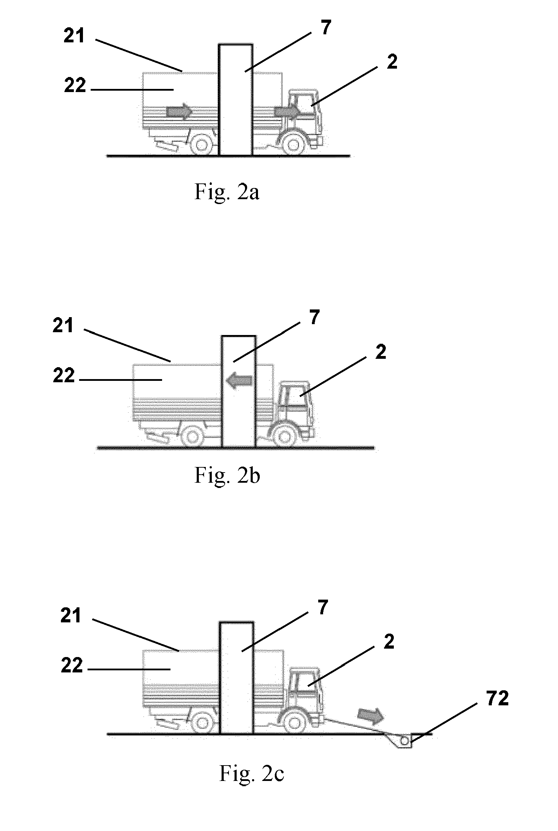

In Fig. 2 a - c sind schematische Darstellungen eines ersten, zweiten und dritten Ausführungsbeispiels einer Bewegungsrichtung eines Lastwagens in der Enteisungsanlage dargestellt. Die Fig. 2 a - c weisen dabei viele Gemeinsamkeiten mit den Fig. 1 a - c auf, weshalb nur auf die Unterschiede eingegangen wird. In den Fig. 2 a - c sind Pfeile dargestellt, welche die Bewegungsrichtung der Enteisungsanlage 7 oder des Lastwagens 2 anzeigen. Im ersten Ausführungsbeispiel der Bewegungsrichtung der Enteisungsanlage 7 in der Fig. 2 a wird der Lastwagen 2 durch die Enteisungsanlage 7, hier ein Portal, bewegt. Der Lastwagen 2 durchfährt in einem Betriebszustand die Enteisungsanlage 7 in eine Richtung (siehe Pfeil) und wird während der Durchfahrt an der Oberseite 21 enteist. Im zweiten Ausführungsbeispiel der Bewegungsrichtung der Enteisungsanlage 7 in der Fig. 2 b wird in einem Betriebszustand der Lastwagen 2 in die Enteisungsanlage 7, hier ein Portal, eingefahren und steht während einer Enteisung der Oberseite 21 des Lastwagens 2. Die Enteisungsanlage 7, insbesondere das Portal, wird während der Enteisung in eine Richtung (siehe Pfeil) bewegt bzw. hin und her bewegt (nicht dargestellt). Im dritten Ausführungsbeispiel der Bewegungsrichtung der Enteisungsanlage 7 in der Fig. 2 c wird in einem Betriebszustand der Lastwagen 2 in die Enteisungsanlage 7, hier ein Portal, eingefahren und steht, ebenso wie die Enteisungsanlage 7, während der Enteisung der Oberseite 21 des Lastwagens 2. in der Fig. 2 c wird der Lastwagen 2 mittels einer Bewegungseinheit 72 durch das Portal gezogen und so die Oberseite 21 des Lastwagens 2 enteist.

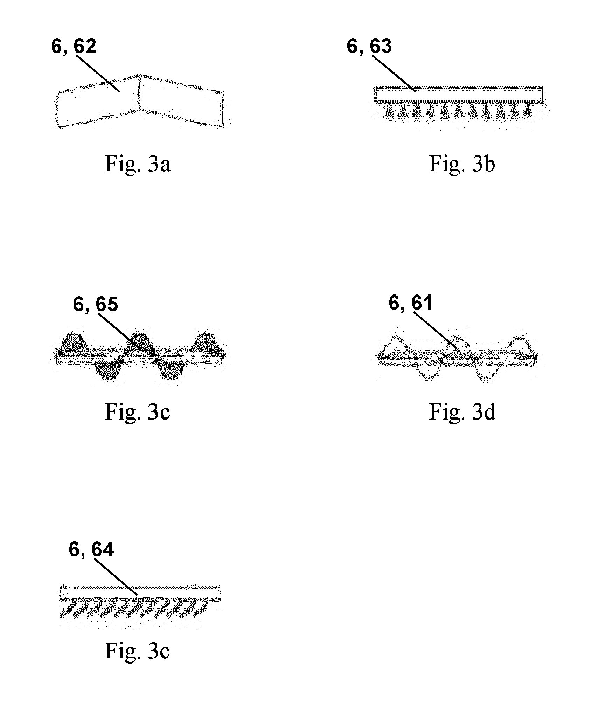

In den Fig. 3 a - e sind schematische Darstellungen eines ersten, zweiten, dritten, vierten und fünften Ausführungsbeispiels einer Reinigungseinheit 6 dargestellt. Mit der Reinigungseinheit, insbesondere mit den Fig. 3 a - e dargestellten Ausführungsbeispielen der Reinigungseinheit 6, ist eine oder mehrere Lagen einer Schicht aus gefrorenem Wasser, insbesondere eine oder mehrere Lagen Schnee und Eis, von einer der Oberseite 21 des Lastwagens 2 abgewandten Seite der Schicht entfernbar. Ein Reinigungsschritt, der mittels der Reinigungseinheit 6 durchgeführt wird, ist ein optionaler Schritt werden, d.h. dieser kann, muss aber nicht notwendigerweise durchgeführt werden. Wird ein Reinigungsschritt durchgeführt, erfolgt dieser vor einem ersten Enteisungsschritt, weshalb die Reinigungseinheit 6 mit einer ersten Enteisungseinheit 4 in Serie, insbesondere vor der ersten Enteisungseinheit 4 angeordnet ist. Unter in Serie ist dabei jede Anordnung zu verstehen, bei welcher die Reinigungseinheit 6 in der Enteisungsanlage 7 derart angeordnet ist, dass die Oberseite 21 des Lastwagens 2, der die Enteisungsanlage 7 durchfährt bzw. über den die Enteisungsanlage 7 bewegt wird, zuerst mit der Reinigungseinheit 6 in Kontakt kommt und erst danach mit der ersten Enteisungseinheit 4. Als das erste Ausführungsbeispiel einer Reinigungseinheit 6 ist in der Fig. 3 a eine Abstreifeinheit 6, 62, insbesondere ein Räumschild, dargestellt. Als zweites Ausführungsbeispiel einer Reinigungseinheit 6 ist in der Fig. 3 b eine Besprühungseinheit 6, 63, insbesondere eine Hochdruckdampfstrahler, Heisswasserstrahler oder ein Dampfstrahler, dargestellt. Als drittes Ausführungsbeispiel einer Reinigungseinheit 6 ist in der Fig. 3 c eine zweite Bürsteneinheit 6, 65, insbesondere ein oder mehrere Tellerbesen, Spiralbesen oder Rotationsbürsten, dargestellt. Als viertes Ausführungsbeispiel einer Reinigungseinheit 6 ist in der Fig. 3 d eine Förderschnecke 6, 61 dargestellt. Das vierte Ausführungsbeispiel einer Reinigungseinheit 6, eine Drucklufteinheit 6, 64, insbesondere ein Hochdruckstrahler ist in der Fig. 3 e dargestellt.

In den Fig. 4 a - f sind schematische Darstellungen eines ersten, zweiten, dritten, vierten, fünften und sechsten Ausführungsbeispiels einer ersten Enteisungseinheit 4 dargestellt. Die erste Enteisungseinheit 4 ist derart ausgestaltet und angeordnet sind, dass die Schicht aus gefrorenem Wasser auf der Oberseite 21 des Lastwagens 2 mittels der ersten Enteisungseinheit 4 in eine Vielzahl von Teilstücken aufbrechbar ist und / oder die Schicht oder die Vielzahl von Teilstücken von der Oberseite 21 des Lastwagens 2 lösbar sind. Die erste Enteisungseinheit 4 kann eine Schneideeinheit 4, 41 sein, insbesondere ist das erste Ausführungsbeispiel der ersten Enteisungseinheit 4 in Fig. 4 a ein Hochdruckwasserschneider 4, 41 und das zweite Ausführungsbeispiel in Fig. 4 b ein Dampfstrahlschneider 4, 41. Das dritte Ausführungsbeispiel in Fig. 4 c zeigt eine Löseeinheit 4, 42, wobei mittels der Löseeinheit 4, 42 beispielsweise ein Salz oder eine Salzlösung auf die Oberseite 21 des Lastwagens aufgebbar ist. Das vierte Ausführungsbeispiel in Fig. 4 d zeigt eine Infraroteinheit 4, welche mittels Infrarotstrahlung die Schicht aufbricht. In Fig. 4 e ist das fünfte Ausführungsbeispiel der ersten Enteisungseinheit 4 dargestellt, eine Mechanikeinheit 4, 43, die als Schneefrässchleuder 4, 43 ausgeführt ist. Das sechste Ausführungsbeispiel in Fig. 4 f ist ebenfalls eine Mechanikeinheit 4, 43, die aber als Meisselsystem 4, 43 ausgeführt ist.

In den Fig. 5 a - e sind schematische Darstellungen eines ersten, zweiten, dritten, vierten und fünften Ausführungsbeispiels einer zweiten Enteisungseinheit 5 dargestellt. Die zweite Enteisungseinheit 5 ist derart ausgestaltet und angeordnet sind, dass die Vielzahl von Teilstücken auf der Oberseite 21 des Lastwagens 2 mittels der zweiten Enteisungseinheit 5 in entfernbar ist und / oder die Schicht oder die Vielzahl von Teilstücken von der Oberseite 21 des Lastwagens 2 lösbar sind. Wird ein zweiter Enteisungsschritt durchgeführt, erfolgt dieser nach dem ersten Enteisungsschritt, weshalb die zweite Enteisungseinheit 5 mit einer ersten Enteisungseinheit 4 in Serie, insbesondere nach der ersten Enteisungseinheit 4 angeordnet ist. Unter in Serie ist dabei jede Anordnung zu verstehen, bei welcher die zweite Enteisungseinheit 5 in der Enteisungsanlage 7 derart angeordnet ist, dass die Oberseite 21 des Lastwagens 2, der die Enteisungsanlage 7 durchfährt bzw. über den die Enteisungsanlage 7 bewegt wird, zuerst mit der ersten Enteisungseinheit 4 in Kontakt kommt und erst danach mit der zweiten Enteisungseinheit 5. Die zweite Enteisungseinheit 5 kann eine Abstreifeinheit 5, 51, eine Gebläseeinheit 5, 52, eine Spüleinheit 5, 53, eine Förderschnecke 5, 54 oder eine erste Bürsteneinheit 5, 55 sein. Das erste Ausführungsbeispiel der zweiten Enteisungseinheit 5 in Fig. 5 a ist eine Abstreifeinheit 5, 51, insbesondere ein Räumschild und das zweite Ausführungsbeispiel in Fig. 5 b eine Spüleinheit 5, 53, insbesondere ein Wasser- oder Dampfstrahler. Das dritte Ausführungsbeispiel in Fig. 5 c zeigt eine erste Bürsteneinheit 5, 55, insbesondere mit einem oder mehreren Tellerbesen, Spiralbesen oder Rotationsbürsten. Das vierte Ausführungsbeispiel in Fig. 5 d zeigt eine Förderschnecke 5, 54. In Fig. 5 e ist das fünfte Ausführungsbeispiel der zweiten Enteisungseinheit 5 dargestellt, das als eine Gebläseeinheit 5, 52, bevorzugt als ein Druckluft- oder Hochdruckstrahler, ausgeführt ist.

In den Fig. 6 a - c sind schematische Darstellungen eines ersten, zweiten, und dritten Ausführungsbeispiels einer Abführeinheit 8 dargestellt. Mittels der Abführeinheit 8 ist die von der Oberseite 21 des Lastwagens 2 entfernte Vielzahl von Teilstücken abtransportierbar. Im ersten Ausführungsbeispiel in Fig. 6 a ist die Abführeinheit 8 als ein Förderband 8,82 ausgeführt. Dabei fällt die von der Oberseite 21 des Lastwagens 2 entfernte Vielzahl von Teilstücken auf das Förderband 8, 82 und ist abtransportierbar. In einem zweiten Ausführungsbeispiel in Fig. 6 b ist die Abführeinheit als eine Verteilerrutsche 8, 81 mit einem Container (nicht dargestellt) ausgeführt, wobei die Vielzahl von Teilstücken von der zweiten Enteisungseinheit 5 von der Oberseite 21 des Lastwagens 2 in die Verteilerrutsche entfernbar sind. Ein einfacher Auffangbereich 8, 83 ist in Fig. 6 c als drittes Ausführungsbeispiel dargestellt.

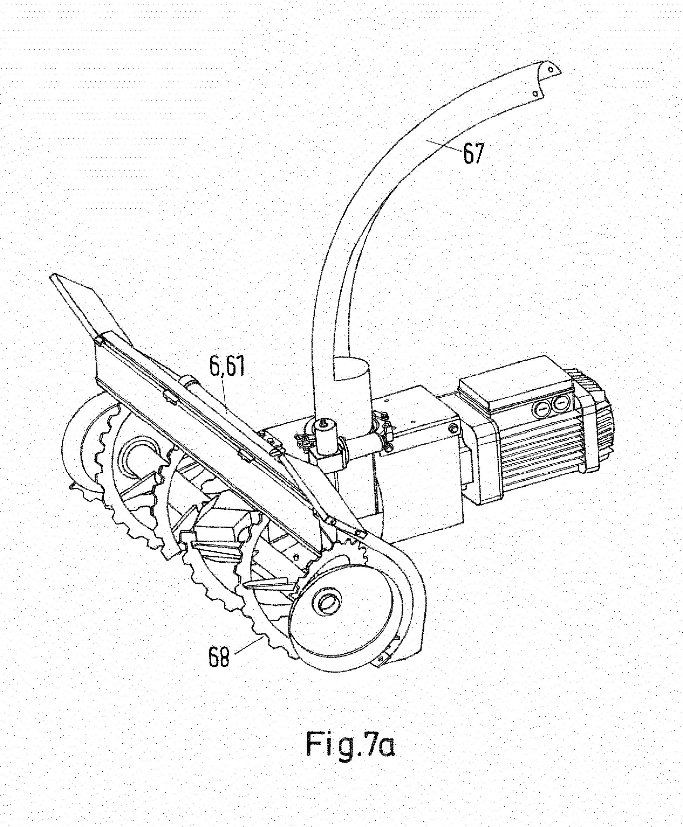

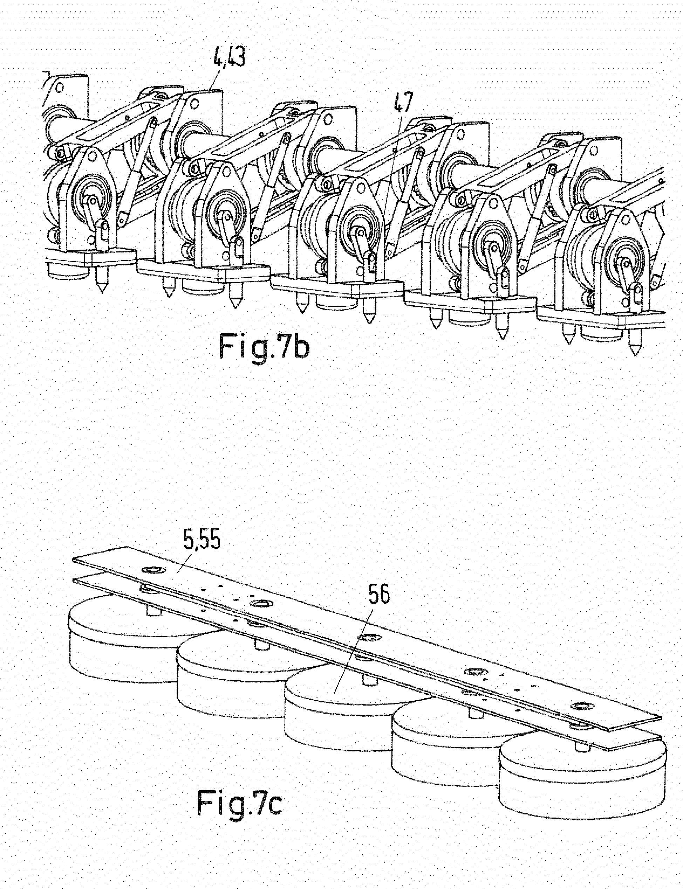

In der Fig. 7 a ist eine schematische Darstellung eines sechsten Ausführungsbeispiels der Reinigungseinheit 6 gezeigt. Die Reinigungseinheit 6 ist als eine Förderschnecke 6, 61, insbesondere als eine Schneefrässchleuder ausgeführt. Die Reinigungseinheit 6 umfasst eine Fräshaspel 68 aus zwei gegenläufigen Spiralen, die sich im Uhrzeigersinn drehen. Mittels der Reinigungseinheit 6 sind eine oder mehrere Lagen der Schicht, insbesondere eine Lage Schnee auf einer Lage Eis, entfernbar. Vorteilhafterweise ist die Schicht dabei zusätzlich in eine Vielzahl von Teilstücken aufbrechbar. Durch die Gegenläufigkeit der Fräshaspel 68 sind die Vielzahl ein Teilstücken in die Mitte der Reinigungseinheit 6 beförderbar und dort von einem Schleuderrad radial beschleunigbar, verdichtbar und durch einen Auswurfkamin 67 auswerfbar. Mit dem Auswurfkamin 67 ist die Richtung und die Flugbahn der Vielzahl von Teilstücken einstellbar, so dass diese am gewünschten Ort zu liegen kommt. Die Gleitkufen, die an beiden Seiten an einem Gehäuse befestig sind, bestimmen den Abstand zum Untergrund. Die gezeigte Reinigungseinheit 6 ist auch als erste Enteisungseinheit 4 einsetzbar.

In Fig. 7 b ist eine schematische Darstellung eines siebten Ausführungsbeispiels einer ersten Enteisungseinheit 5 gezeigt. Die Enteisungseinheit ist als Mechanikeinheit 4, 43, insbesondere als ein Meisselsystem, ausgeführt. Die erste Enteisungseinheit umfasst mehrere Meissel 47, welche über eine Lastwagenbreite verteilt sind. Mittels der Meissel 47 ist die Schicht, insbesondere das Eis, in eine Vielzahl von Teilstücken aufbrechbar. Das Meisselsystem umfasst 12 Meisseleinheiten, mit jeweils zwei Meisseln 47. Eine Meisseleinheit kann sich individuell in der Höhe verstellen und sich so auch gewölbten Dächern anpassen. Die Meissel 47 werden über eine Antriebswelle betrieben. Über einen Zahnriemen wird jeweils pro Meisseleinheit eine Exzenterwelle mit zwei Meisseln 47 in Vibration versetzt. Beim Aufsetzten der Meissel 47 auf die Schicht wird diese aufgebrochen.

In Fig. 7 c ist eine schematische Darstellung eines sechsten Ausführungsbeispiels einer zweiten Enteisungseinheit 5 gezeigt. Die zweite Enteisungseinheit 5 ist in Serie zur und nach der ersten Enteisungseinheit 4 angeordnet. Die zweite Enteisungseinheit 5 ist als eine erste Bürsteneinheit 5, 55 ausgeführt, wobei mehrere Tellerbesen 56 derart angeordnet sind, dass die Vielzahl von Teilstücken auf beide Seiten des Lastwagens von der Oberseite 21 des Lastwagens 2 entfernbar ist. Die Höhenverstellung geschieht über Drucksensoren, so können die Tellerbesen 56 auch Schnee aus Vertiefungen beseitigen. Ein Elektromotor treibt einen Keilriemen an, welcher die Antriebsleistung auf die Tellerbesen 56 überträgt.

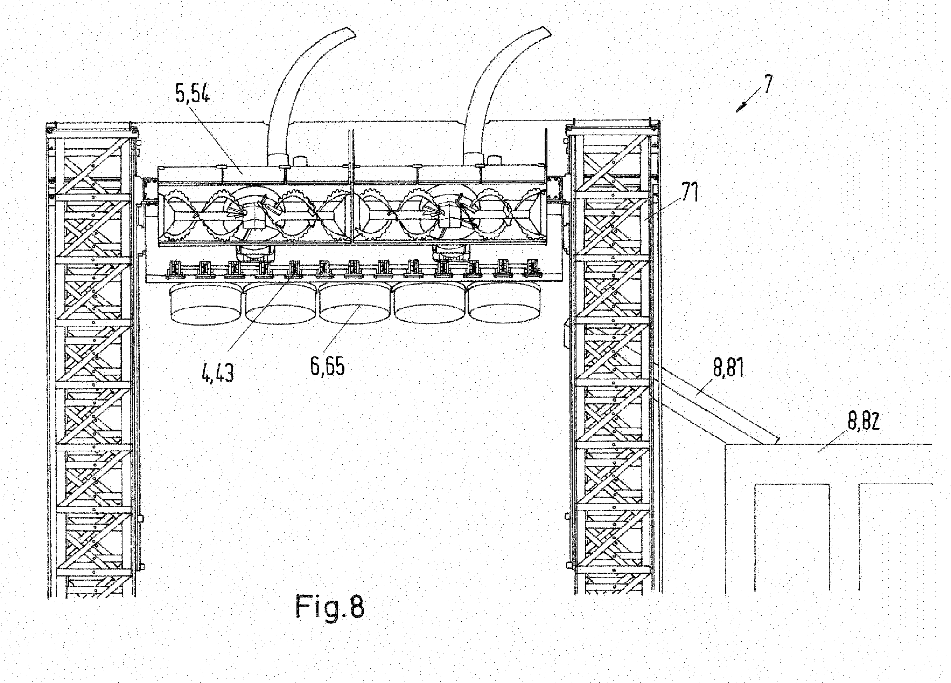

Fig. 8 zeigt eine schematische Darstellung eines vierten Ausführungsbeispiels einer Enteisungsanlage 7. Die Enteisungsanlage 7 umfasst eine erste und zweite Enteisungseinheit 4, 43 und 5, 54 sowie eine Reinigungseinheit 6, 65. Die Enteisungsanlage 7 ist als ein Gerüst 71 in Portalform ausgeführt und ein Lastwagen 2 kann durch Enteisungsanlage 7 hindurchfahren oder die Enteisungsanlage 7 über den ruhig stehenden Lastwagen 2 hin und / oder her bewegt werden. Ausserdem umfasst die Enteisungsanlage eine Abführeinheit 8, die als Verteilerrutsche 8, 81 ausgeführt ist, sodass die Vielzahl von Teilstücken abtransportierbar ist. Das Verfahren zur Enteisung kann wie folgt beschrieben werden. Der Lastwagen 2 kann sich mit konstanter Geschwindigkeit, beispielsweise 5 km/h, bewegen. Eine Höhe der Reinigungseinheit 6 ist einstellbar. Hierfür ist vor der Reinigungseinheit 6 ein Sensor angeordnet, der fortlaufend die Höhe des Lastwagens 2 bzw. der Oberseite 21 des Lastwagens 2 misst. Anhand der Messwerte wird die ideale Höhe der Reinigungseinheit 6 ermittelt. Anschliessend wird eine oder mehrere Lagen, insbesondere der Schnee, von der Reinigungseinheit 6 entfernt und mittels des Auswurfkamins in die Abführeinheit 8 geschleudert. In ersten Enteisungsschritt wird, beispielsweise die in den Vertiefungen eines Planendachs, die Schicht in eine Vielzahl von Teilstücken, mittels der ersten Enteisungseinheit 4, beispielsweise ein Meisselsystem, aufgebrochen. In einem nächsten Schritt entfernt die zweite Enteisungseinheit 5 die Vielzahl von Teilstücken auf eine Seite des Lastwagendachs, wo es über schräg abfallende Fläche, die Verteilerrutsche 8, 81, in den Container 8, 82 abtransportiert wird.

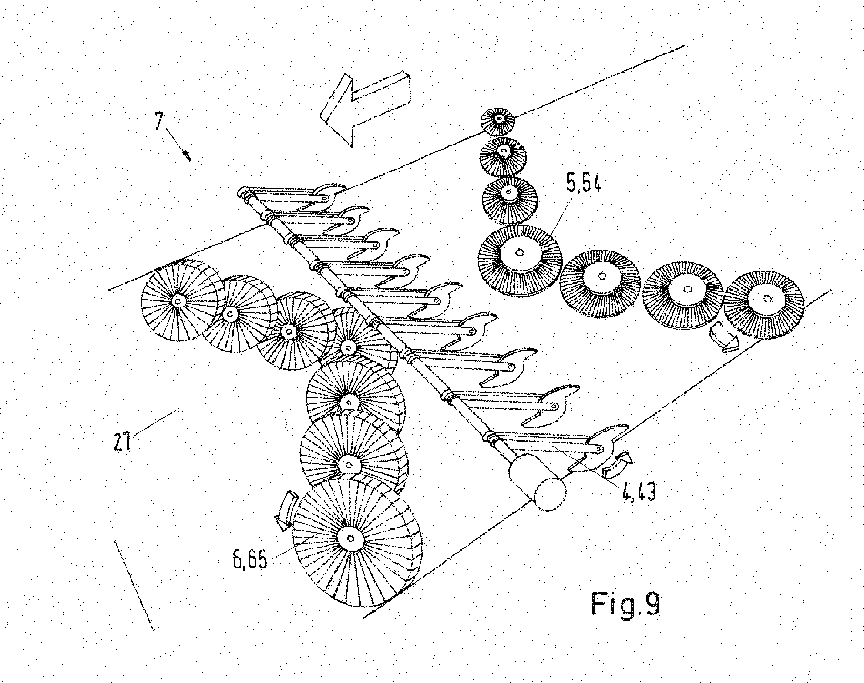

In Fig. 9 zeigt eine schematische Darstellung eines fünften Ausführungsbeispiels einer Enteisungsanlage 7. Die Fig. 9 weist dabei viele Gemeinsamkeiten mit Fig. 8 auf, weshalb nur auf die Unterschiede eingegangen wird. Die Enteisungsanlage 7 umfasst ebenfalls eine erste und zweite Enteisungseinheit 4, 43 und 5, 54 sowie eine Reinigungseinheit 6, 65. Die Reinigungseinheit 6 ist dabei als zweite Bürsteneinheit 65, die eine oder mehrere Lagen der Schicht entfernt, ausgebildet. Dabei bürstet eine Bürste den Schnee jeweils hinter die nächste Bürste und über die Oberseite 21 des Lastwagens. Die Bürsten sind dabei in einer V-Stellung angeordnet. Dabei sind alle Bürsten dem gleichen Druck ausgesetzt, wodurch der Verschleiss der Bürsten gleichmässiger ist. Die restlichen Lagen der Schicht, insbesondere das freigelegte Eis, wird mit der ersten Enteisungseinheit 4, die als eine Mechanikeinheit 4, 43, insbesondere als ein Schlagwalzensystem, ausgeführt ist, in eine Vielzahl von Teilstücken aufgebrochen. Abschliessend entfernt die zweite Enteisungseinheit, die als erste Bürsteneinheit 5, 54 ausgebildet ist, die Vielzahl von Teilstücken. Die erste Bürsteneinheit 5, 54 ist dabei in einer Keilform angeordnet, um eine höhere Effizienz zu erreichen.

## Patentansprüche

1. Verfahren zur Enteisung einer Oberseite eines Lastwagens umfassend
- einen ersten Enteisungsschritt, wobei eine Schicht aus gefrorenem Wasser auf der Oberseite des Lastwagens in eine Vielzahl von Teilstücken aufgebrochen wird und
- anschliessend in einem zweiten Enteisungsschritt die Vielzahl von Teilstücken von der Oberseite entfernt werden,
wobei im ersten oder zweiten Enteisungsschritt die Vielzahl von Teilstücken von der Oberseite gelöst werden.

2. Verfahren nach Anspruch 1, wobei die Schicht aus gefrorenem Wasser eine oder mehrere Lagen umfasst, insbesondere eine Lage Eis und / oder eine Lage Schnee.

3. Verfahren nach einem der Ansprüche 1 oder 2, wobei vor dem ersten Enteisungsschritt ein Reinigungsschritt durchgeführt wird.

4. Verfahren nach einem der vorangehenden Ansprüche, wobei der Reinigungsschritt eine Lage der Schicht aus gefrorenem Wasser auf der Oberseite des Lastwagens entfernt.

5. Verfahren nach einem der vorangehenden Ansprüche, wobei die Reinigungseinheit und / oder die erste Enteisungseinheit und / oder die zweite Enteisungseinheit in eine Enteisungsanlage integriert sind, wobei die Enteisungsanlage während des Reinigungsschritts und / oder des ersten Enteisungsschritts und / oder des zweiten Enteisungsschritts in eine Längsrichtung entlang der Oberseite des Lastwagens hin und / oder her bewegt wird.

6. Verfahren nach einem der vorangehenden Ansprüche, wobei der Lastwagen, bevorzugt die Oberseite des Aufbaus des Lastwagens, während des Reinigungsschritts und / oder des ersten Enteisungsschritts und / oder des zweiten Enteisungsschritts in der Enteisungsanlage hin und / oder her bewegt wird.

7. Vorrichtung zur Enteisung einer Oberseite (21) eines Lastwagens (2) mittels Aufbrechen, Lösen und Entfernen einer Schicht (3) aus gefrorenem Wasser von der Oberseite (21) des Lastwagens (2) umfassend
- eine erste Enteisungseinheit (4) und
- eine zweite Enteisungseinheit (5),
wobei die erste Enteisungseinheit (4) und die zweite Enteisungseinheit (5) in Serie angeordnet sind, und die erste Enteisungseinheit (4) und die zweite Enteisungseinheit (5) derart ausgestaltet und angeordnet sind, dass die Schicht aus gefrorenem Wasser auf der Oberseite (21) des Lastwagens (2) mittels der ersten Enteisungseinheit (4) in eine Vielzahl von Teilstücken aufbrechbar ist und die Vielzahl von Teilstücken mittels der zweiten Enteisungseinheit (5) von der Oberseite (21) des Lastwagens (2) entfernbar ist, wobei die Vielzahl von Teilstücken mittels der ersten oder zweiten Enteisungseinheit (4, 5) von der Oberseite (21) des Lastwagens (2) lösbar sind.

8. Vorrichtung nach Anspruch 7, wobei die erste Enteisungseinheit (4) eine Schneideeinheit (4, 41), eine Löseeinheit (4, 42) oder eine Mechanikeinheit (4, 43) ist.

9. Vorrichtung nach einem Ansprüche 7 oder 8, wobei die zweite Enteisungseinheit (5) eine Abstreifeinheit (5, 51), eine Gebläseeinheit (5, 52), eine Spüleinheit (5, 53), eine Förderschnecke (5, 54) oder eine erste Bürsteneinheit (5, 55) ist.

10. Vorrichtung nach einem der Ansprüche 7 bis 9, wobei die Vorrichtung eine Reinigungseinheit (6) umfasst und die Reinigungseinheit (6) und die erste Enteisungseinheit (4) in Serie angeordnet sind.

11. Vorrichtung nach Anspruch 10, wobei die Reinigungseinheit (6) eine Förderschnecke (6, 61), ein Abstreifeinheit (6, 62), eine Besprühungseinheit (6, 63), eine Drucklufteinheit (6, 64) oder eine zweite Bürsteneinheit (6, 65) ist.

12. Vorrichtung nach einem der vorangehenden Ansprüche, wobei die Reinigungseinheit (6) und / oder die erste Enteisungseinheit (4) und / oder die zweite Enteisungseinheit (5) in eine Enteisungsanlage (7) integriert sind.

13. Vorrichtung nach einem der vorangehenden Ansprüche, wobei in einem Betriebszustand die Enteisungsanlage (7) entlang der Oberseite (2) des Lastwagen (2), insbesondere der Oberseite (21) eines Aufbaus (22) des Lastwagens (2), hin und / oder her bewegbar ist.

14. Vorrichtung nach einem der vorangehenden Ansprüche, wobei in einem anderen Betriebszustand der Lastwagen (2) mit der Oberseite (2), bevorzugt der Lastwagen (2) mit der Oberseite (21) des Aufbaus (22), an der Enteisungsanlage (7) hin und / oder her bewegbar ist.

15. Vorrichtung nach einem der vorangehenden Ansprüche, wobei die von der Oberseite (21) des Lastwagens (2) entfernte Vielzahl von Teilstücken mittels einer Abführeinheit (8), insbesondere mittels einer Verteilerrutsche (81), einem Förderband (82) oder einem Auffangbereich (83), vom Lastwagen (2) abtransportierbar ist.
